# EUROPÄISCHE PATENTANMELDUNG

(11) **EP 3 290 291 A1**
(43) Veröffentlichungstag der Anmeldung: **07.03.2018**
(21) Anmeldenummer: 17186819.3
(22) Anmeldetag: 18.08.2017
(51) Int. Cl.: B62B 17/08

(54) **SCHLITTEN MIT AUTOMATISCHER SICHERHEITSBREMSE**

(30) Priorität: 31.08.2016 AT 80032017
(71) Anmelder: Ferner, Reinhard, 8822 Mühlen (AT)
(72) Erfinder: Ferner, Reinhard, 8822 Mühlen (AT); Benoni, Albert, 1060 Wien (AT)
(74) Vertreter: Schwarz & Partner Patentanwälte OG

(57) **Zusammenfassung**

Schlitten (21, 51), welcher zwei Kufen (22), zwei Holme (26), zwei Querstreben (25), vier Füße (24), sowie eine flexible Sitzfläche und eine automatische Sicherheitsbremse aufweist, welche zumindest ein Gelenksviereck (38), welches einen Druckbogen (33, 58), eine Bremskralle (35, 62), eine Koppel (41) sowie ein Federelement (36, 60) beinhaltet, aufweist, wobei die Bremskralle und der Druckbogen schwenkbar am Schlitten gelagert sind und die Koppel mit dem Druckbogen und der Bremskralle gelenkig verbunden ist, wobei das Federelement mit dem Schlitten verbunden ist und eine Kraft auf das Gelenksviereck ausübt, wobei im unbelasteten Zustand des Schlittens der Druckbogen im Wesentlichen durch die Holmebene anliegend an die flexible Sitzfläche verschwenkt, sowie die Bremskralle zum Bremsen zwangsgeführt durch die Kufenebene nach unten verschwenkt ist, und im durch den sitzenden Benutzer belasteten Zustand des Schlittens sich der an die flexible Sitzfläche anliegende Druckbogen sowie die Bremskralle im Wesentlichen zwischen der Holmebene und der Kufenebene befinden und den Schlitten somit nicht bremst.

## Beschreibung

Die Erfindung betrifft einen Schlitten gemäß dem Oberbegriff des Anspruchs 1.

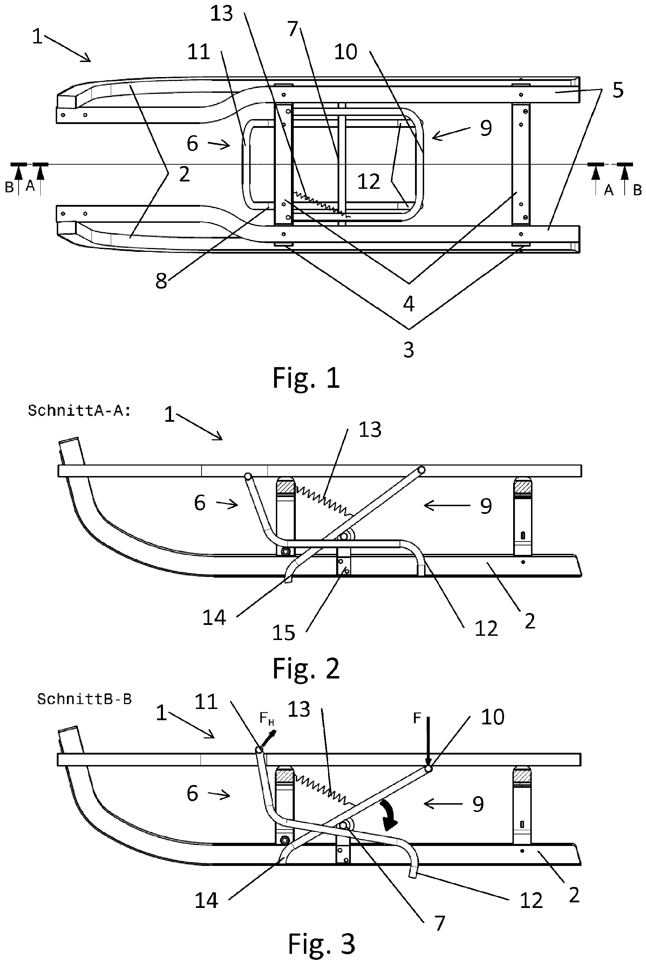

Figur 1 offenbart einen handelsüblichen Schlitten 1 in einer Draufsicht, ohne montierter flexibler Sitzfläche, umfassend zwei gebogene Kufen 2. Des Weiteren umfasst der Schlitten 1 vier Füße 3 und zwei Querstreben 4, wobei über die Füße 3, die Kufen 2 und die Querstreben 4 fest miteinander verbunden sind. Der Schlitten 1 weist, jeweils oberhalb der beiden Kufen 2, zwei Holme 5 auf, die auf den Querstreben 4, entlang der Fahrtrichtung, montiert sind. Die Querstreben 4 bilden mit den Holmen 5 die Basis für die flexible Sitzfläche die zum Beispiel mit Sitzgurten gebildet ist. Der Schlitten 1 umfasst eine Handbremse 6 die aus einer Drehachse 7, einem Handbremshebel 8 besteht und eine automatische Sicherheitsbremse 9, die am unteren Ende zwei Bremskrallen und am oberen Ende einen Druckbogen 10 aufweist und wobei die Drehachse 7 auch Teil der automatischen Sicherheitsbremse 9 ist. Der Handbremshebel 8 weist am vorderen Ende einen Haltegriff 11 und am gegenüberliegenden Ende zwei Handbremskrallen 12 auf. Der Schlitten 1 umfasst zwei Lagerböcke, die die Drehachse 7 aufnehmen in welcher die Handbremse 6 und die automatische Sicherheitsbremse 9 drehbar gelagert sind. Die automatische Sicherheitsbremse 9 umfasst eine Zugfeder, die mit dem in Fahrtrichtung gesehen vorderen der Querstreben 4 verbunden ist.
Figur 2 zeigt den Schlitten 1 gemäß Figur 1 in einer Schnittansicht A-A, wobei die Bremskrallen 14 der automatische Sicherheitsbremse 9 durch die vorgespannte Zugfeder 13 in eine Fahrbahn eingreifen und die Handbremskrallen 12 der Handbremse 6 nicht in die Fahrbahn eingreifen. Die zwei Lagerböcke 15 sind durch Verbindungsmittel mit den Kufen 2 fest verbunden.
Figur 3 zeigt den Schlitten 1 gemäß Figur 1 in einer Schnittansicht B-B, wobei eine Kraft F auf den Druckbogen 10 der automatischen Sicherheitsbremse 9 wirkt und eine Kraft F_{H} auf den Haltegriff 11 der Handbremse 6 wirkt. Die Kraft F ist zum Bespiel durch einen, auf der Sitzfläche positionierten, Fahrer eingeleitet der auch die Kraft F_{H} durch ziehen des Haltgriffs 11 aufbringt. Die Kraft F wirkt gegen die vorgespannte Zugfeder 13 und hebt, durch Drehung der automatischen Sicherheitsbremse 9 um die Drehachse 7, die Bremskrallen 14 aus der Fahrbahn. Die Kraft F_{H} bewirkt eine Drehung der Handbremse 6 um die Drehachse 7 wodurch die Handbremskrallen 12 in die Fahrbahn eingreifen.

Der in den Figuren 1-3 dargestellte Schlitten umfasst also zwei zusätzliche Bremssysteme die bei einer Abfahrt auf schneebedeckten Fahrbahnen mehr Sicherheit gewährleisten. Bei handelsüblichen Schlitten bremst der Fahrer hauptsächlich mit den Füßen, die er in die Fahrbahn hinein stemmt. In diesem Ausführungsbeispiel steht dem Fahrer zusätzlich noch die Handbremse zu Verfügung, die bei zusätzlicher Benützung zu den Füßen die Bremswirkung vorteilhafterweise noch erhöht. Die vorgespannte Zugfeder bewirkt um die Drehachse ein Moment auf die automatische Sicherheitsbremse, welches einerseits den Druckbogen gegen die flexible Sitzfläche des Schlittens drückt, wobei die flexible Sitzfläche den Drehweg der automatischen Sicherheitsbremse begrenzt. Andererseits drückt das Moment die Bremskrallen in die Fahrbahn und hebt dadurch den Schlitten von der Fahrbahn ab. Nimmt ein Fahrer auf der flexiblen Sitzfläche des Schlittens platzt, wirkt das Eigengewicht (Kraft F) des Fahrers gegen den Druckbogen der automatischen Sicherheitsbremse und infolgedessen gegen das, durch die vorgespannte Zugfeder, eingebrachte Moment. Die somit eingeleitete Drehbewegung der automatischen Sicherheitsbremse hebt die Bremskrallen aus der Fahrbahn und die Fahrt kann aufgenommen werden. Kommt es während der Fahrt zu einem Unfall, d.h. der Fahrer fällt von der Sitzfläche des Schlittens, drückt das Moment der vorgespannten Zugfeder die Bremskrallen in die Fahrbahn und der Schlitten wird gestoppt. Dadurch wird verhindert, dass der Schlitten selbst Fahrt aufnimmt und weitere Personen gefährdet oder durch einen Aufprall beschädigt wird.
Beim gezeigten Ausführungsbeispiel hat es sich als Nachteil erwiesen, dass die gezeigte Ausführung der automatischen Sicherheitsbremse unweigerlich, während einer Fahrt in die Fahrbahn eingreift. Besonders bei Fahrten mit hoher Geschwindigkeit und auf unebenen Fahrbahnen, kann der Schlitten mitsamt dem Fahrer von der Fahrbahn abheben wodurch kurzzeitig keine Kraft auf den Druckbogen wirkt und die Bremskrallen der automatischen Sicherheitsbremse in die Fahrbahn eingreifen. Verstärkt wird diese Wirkung dadurch, dass die gezeigten Bremskrallen entgegen der Fahrtrichtung eingreifen und deren Bremskräfte hohe Kräfte des Druckbogens gegen die Sitzfläche verursachen und die Sitzfläche beschädigen können. Insbesondere wenn der Schlitten häufig, zum Beispiel als Verleihgerät, im Einsatz ist.

Bei einer Fahrt mit dem gezeigten Ausführungsbeispiel kann die automatische Sicherheitsbremse ungewollt aber permanent in die Fahrbahn eingreifen und leicht bremsen. Besonders auf einer Fahrbahn, welche frisch präpariert ist, sinken die Kufen des Schlittens tiefer in den Schnee und infolgedessen kommen die Bremskrallen der automatischen Sicherheitsbremse mit der Fahrbahn permanent in Berührung. Es hat sich als Nachteil erwiesen, dass über den direkten Hebel zwischen Bremskrallen und Druckbogen der automatischen Sicherheitsbremse die Bremskrallen unzureichend von der Fahrbahn gehoben werden, insbesondere wenn der vertikale Weg des Druckbogens durch die konstruktiven Gegebenheiten eines handelsüblichen Schlittens beschränkt ist.

Es hat sich als Nachteil erwiesen, dass der zusätzliche Aufbau der Handbremse und der automatischen Sicherheitsbremse durch das zusätzliche Gewicht den Schlitten, besonders für Kinder, unhandlicher macht.

Der Erfindung liegt die Aufgabe zu Grunde, einen Schlitten mit einer automatischen Sicherheitsbremse zu schaffen mit dem vorgenannte Nachteile überwunden werden können.

Erfindungsgemäß wird diese Aufgabenstellung dadurch gelöst, dass die automatische Sicherheitsbremse zumindest ein Gelenksviereck, welches einen Druckbogen, eine Bremskralle, eine Koppel sowie ein Federelement beinhaltet, aufweist, wobei die Bremskralle und der Druckbogen schwenkbar am Schlitten gelagert sind und die Koppel mit dem Druckbogen und der Bremskralle gelenkig verbunden ist, wobei das Federelement mit dem Schlitten verbunden ist und eine Kraft auf das Gelenksviereck ausübt, wobei im unbelasteten Zustand des Schlittens der Druckbogen im Wesentlichen durch die Holmebene anliegend an die flexible Sitzfläche verschwenkt, sowie die Bremskralle zwangsgeführt durch die Kufenebene verschwenkt ist, und im belasteten Zustand des Schlittens sich der an die flexible Sitzfläche anliegende Druckbogen sowie die Bremskralle im Wesentlichen zwischen der Holmebene und der Kufenebene befinden.

Ein Gelenkviereck bzw. ein viergliedriges Koppelgetriebe besteht aus vier in einer Ebene liegenden drehbar verbundenen Stäben. Die vier Stäbe unterscheiden sich in ihrer Aufgabe und werden Gestell, Schwinge, Koppel und Kurbel genannt. In der Kinematik wird das Gestell als ortsfest angesehen (festgehalten) und die Kurbel wird angetrieben. Die Koppel überträgt die Bewegung der Kurbel auf die Schwinge. Durch festlegen der geometrischen Bedingungen des Gelenksvierecks sind die Bewegungsabläufe der einzelnen Stäbe vordefiniert und infolgedessen auch die Winkelausschläge der bewegten Stäbe definiert. Je nach geometrischer Vorauslegung kann somit ein geringer Winkelausschlag der Kurbel eine größeren Winkelausschlag der Schwinge bedeuten oder umgekehrt, daher auch der Name viergliedriges Koppelgetriebe.

Weitere vorteilhafte Ausgestaltungen des erfindungsgemäßen Schlittens mit automatischer Sicherheitsbremse werden im Folgenden anhand der Figuren näher erläutert.

Figur 4 zeigt einen erfindungsgemäßen Schlitten mit automatischer Sicherheitsbremse in einer isometrischen Ansicht, wobei die flexible Sitzfläche nicht dargestellt ist.

Figur 5 zeigt den erfindungsgemäßen Schlitten gemäß Figur 4 in einer Schnittansicht, wobei der Schnitt in der Mitte des Schlittens und entlang der Fahrtrichtung verläuft und der Schlitten im unbelasteten Zustand dargestellt ist.

Figur 6 zeigt eine Detailansicht D des erfindungsgemäßen Schlittens 21 gemäß Figur 5.

Figur 7 zeigt den erfindungsgemäßen Schlitten gemäß Figur 4 in einer Schnittansicht, wobei der Schnitt in der Mitte des Schlittens und entlang der Fahrtrichtung verläuft und der Schlitten im belasteten Zustand dargestellt ist.

Figur 8 zeigt einen bevorzugten, erfindungsgemäßen Schlitten mit automatischer Sicherheitsbremse in einer isometrischen Ansicht, wobei die flexible Sitzfläche nicht dargestellt ist.

Figur 9 zeigt den erfindungsgemäßen Schlitten gemäß Figur 8 in einer Schnittansicht, wobei der Schnitt in der Mitte des Schlittens und entlang der Fahrtrichtung verläuft und der Schlitten im unbelasteten Zustand dargestellt ist.

Figur 10 zeigt den erfindungsgemäßen Schlitten gemäß Figur 8 in einer Schnittansicht, wobei der Schnitt in der Mitte des Schlittens und entlang der Fahrtrichtung verläuft und der Schlitten im belasteten Zustand dargestellt ist.

Figur 11 zeigt eine bevorzugte Ausführungsvariante des erfindungsgemäßen Schlittens in einer Schnittansicht, wobei der Schnitt in der Mitte des Schlittens und entlang der Fahrtrichtung verläuft und der Schlitten im belasteten Zustand dargestellt ist.

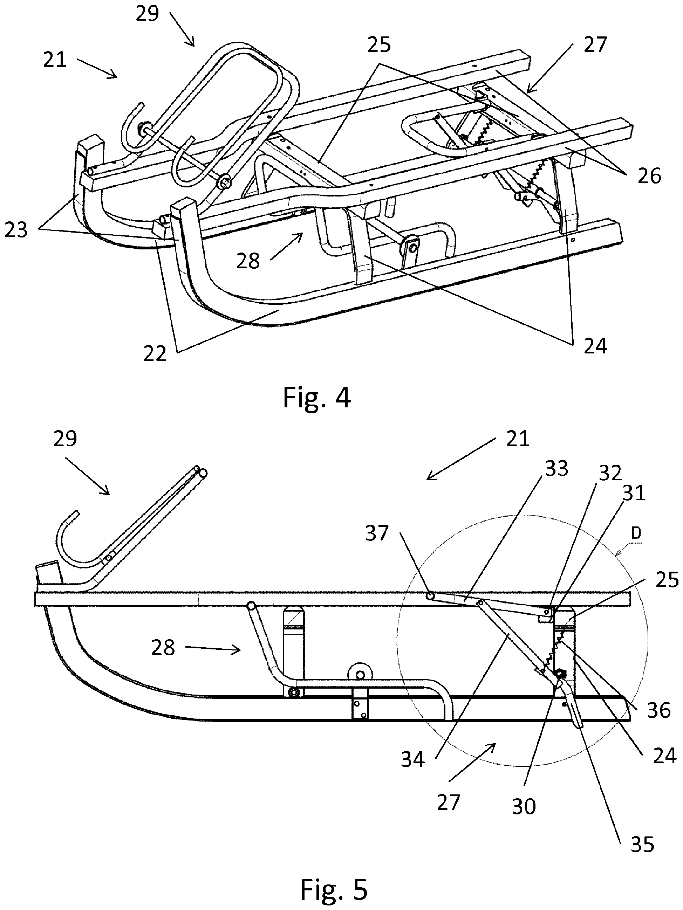

Figur 4 offenbart einen erfindungsgemäßen Schlitten 21 in einer isometrischen Ansicht, wobei die flexible Sitzfläche nicht dargestellt ist, umfassend zwei gebogene Kufen 22. Des Weiteren umfasst der Schlitten 21 vier Füße 24 und zwei Querstreben 25, wobei über die Füße 24, die Kufen 22 und die Querstreben 25 fest miteinander verbunden sind. Der Schlitten 21 weist, jeweils oberhalb der beiden Kufen 22, zwei Holme 26 auf, die auf den Querstreben 25, entlang der Fahrtrichtung, montiert sind. Die Querstreben 25 bilden mit den Holmen 26 die Basis für die flexible Sitzfläche die zum Beispiel mit Sitzgurten gebildet ist. Des Weiteren umfasst der Schlitten 21 eine automatische Sicherheitsbremse 27, eine Handbremse 28 und ein Einhängesystem 29.

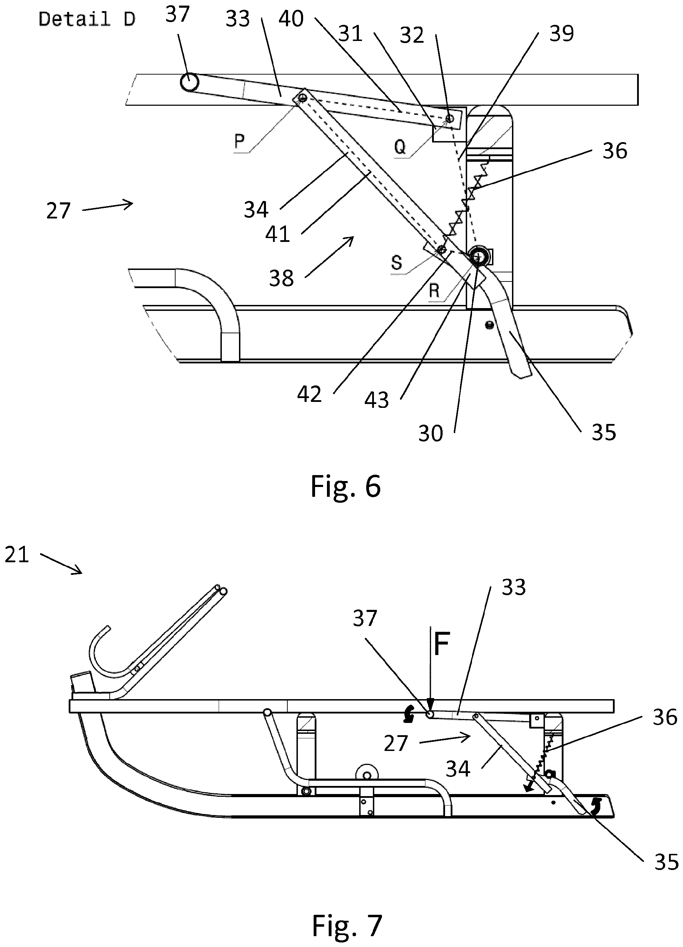

Figur 5 zeigt den erfindungsgemäßen Schlitten 21 gemäß Figur 4 mit der automatischen Sicherheitsbremse 27, der Handbremse 28 und einem Einhängesystem 29, wobei der Schlitten 21 und die automatische Sicherheitsbremse 27 im unbelasteten Zustand dargestellt sind. Die automatische Sicherheitsbremse 27 umfasst eine Drehachse 30 die mit den hinteren Füßen 24 fest verbunden ist, des Weiteren zwei Winkel 31 die eine weitere Drehachse 32 bilden und hierfür fest mit der hinterem Querstrebe 25 verbunden sind. Die automatische Sicherheitsbremse 27 weist zwei Gelenkvierecke (Vgl. Figur 6) auf die aus einem Druckbogen 33, zwei Koppelstangen 34, zwei Bremskrallen 35 und den beiden Drehachsen 30 und 32 gebildet sind, wobei die Verbindungen untereinander gelenkig ausgeführt sind.

Eine nähere Beschreibung der Gelenkvierecke folgt in Figur 6. Die automatische Sicherheitsbremse 27 umfasst zwei Zugfedern 36 die in Einbaulage vorgespannt sind und in den Verbindungen zwischen Koppelstangen 34 und Bremskrallen 35 wirken und hierfür am gegenüberliegenden Ende mit den hinteren Füßen 24 verbunden sind. Diese Positionierung des Angreifpunktes der Zugfedern 36 ermöglicht vorteilhafterweise eine besonders effiziente Übertragung der Federkraft auf das Gelenksviereck bei gleichzeitig simpler Bauweise. Die Verwendung von Zugfedern 36 als Federelemente und Koppelstangen 34 als Koppel bietet den Vorteil einer besonders robusten und einfach zu reparierenden Konstruktion. Die kinematischen Beziehungen der automatischen Sicherheitsbremse 27 und die Zugkräfte der vorgespannten Zugfedern 36 bewirken, dass erstens ein vorderes Ende 37 des Druckbogens 33 entgegen der Schwerkraft auf eine flexible Sitzfläche wirkt und zweitens die Bremskrallen 35 das hintere Ende des Schlittens 21 von der Fahrbahn abheben und durch den Kontakt mit der Fahrbahn eine Bremswirkung erzeugen. Es sei erwähnt, dass die flexible Sitzfläche des erfindungsgemäßen Schlittens 21 in Figur 5 nicht dargestellt ist.
Es kann erwähnt werden, dass die Zugfedern 36 auch an einer anderen Stelle mit dem erfindungsgemäßen Schlitten 21 verbunden sein können, beziehungsweise dass diese auch an einer andere Stelle mit dem Gelenkviereck verbunden sein können.

Figur 6 zeigt in der Detailansicht D die automatische Sicherheitsbremse 27 des erfindungsgemäßen Schlittens 21 gemäß Figur 4, wobei die Strichlinien Stäbe des Gelenkvierecks 38 darstellen. Die Drehachse 30 (Punkt R) und die Drehachse 32 (Punkt Q) sind fest mit dem erfindungsgemäßen Schlitten 21 verbunden und bilden ein Gestell 39, zwischen den Punkten R und Q, des Gelenksvierecks 38. Wie eingangs beschrieben ist das Gestell eines Gelenkvierecks der Stab der festgehalten wird. In diesem Fall ist das Gestell 39 fest mit dem Schlitten 21 verbunden. Der Druckbogen 33 ist drehbar in der Drehachse 32 gelagert und des Weiteren im Punkt P mit den Koppelstangen 34 gelenkig verbunden. Der Druckbogen 33 bildet zwischen den Punkten P und Q eine Kurbel 40 des Gelenkvierecks 38. Die Koppelstangen 34 sind im Punkt S mit den Bremskrallen 35 gelenkig verbunden und die Koppelstangen 34 bilden zwischen den Punkten P und S eine Koppel 41 des Gelenkvierecks 38. Die Bremskrallen 35 sind in der Drehachse 30 drehbar gelagert und bilden zwischen den Punkten S und R eine Schwinge 42 des Gelenkvierecks 38. Die in Einbaulage vorgespannten Zugfedern 36 wirken im Punkt S des Gelenkvierecks 38 und drücken das vordere Ende 37 des Druckbogens 33 gegen die nicht dargestellte flexible Sitzfläche. Ein unteres Ende 43 der Koppelstange 34 erstreckt sich über den Punkt S der Koppel 41. Ist die automatische Sicherheitsbremse 27 unbelastet liegt das untere Ende 43 an der Drehachse 30 an und dient als Wegbegrenzung für die Zugfedern 36. Dadurch ist Vorteil erhalten, dass auch der Weg des vorderen Endes 37 in Richtung flexible Sitzfläche begrenzt ist und die flexible Sitzfläche dadurch nicht die gesamten Kräfte der Zugfedern 36 aufnehmen muss. Über das so gebildete Gelenkviereck 38 ergeben sich Winkelbeziehungen zwischen der Auslenkung des Druckbogens 33 und der Auslenkung der Bremskrallen 35. Das Gelenkviereck 38 ist so gebildet ist, dass ein geringer Winkelausschlag des Druckbogens 33 einen größeren Winkelausschlag der Bremskrallen 35 ergibt, wodurch der Vorteil erhalten ist, dass bei Belastung des Druckbogens 33 sich die Bremskrallen 35 weiter von der Fahrbahn abheben, als wenn der Druckbogen mit den Bremskrallen über einen einfachen Hebel verbunden ist.

Es kann erwähnt werden, dass das Gelenkviereck am Schlitten anders angeordnet werden kann, zum Beispiel das der Punkt Q, in Fahrtrichtung gesehen, hinter der hinteren Querstrebe liegen kann, oder dass der Punkt R, in Fahrtrichtung gesehen, vor den hinteren Füßen positioniert werden kann. Des Weiteren sei erwähnt, dass die einzelnen Stäbe des Gelenkvierecks anderen Teilen zugeordnet sein können, zum Beispiel dass die Drehachsen des Gestells mit den Holmen oder mit den Kufen fest verbunden sein können, und dass anstatt oder mit dem Gelenkviereck auch andere Arten von Koppelgetrieben verbaut sein können.

Figur 7 zeigt den erfindungsgemäßen Schlitten 21 gemäß Figur 4, wobei der Schlitten 21 und die automatische Sicherheitsbremse 27 im belasteten Zustand dargestellt sind. Die Belastung erfolgt durch den auf der flexiblen Sitzfläche platzierten Fahrer, dieser ist in Figur 7 als Kraft F schematisch abgebildet. Durch Aufsitzen des Fahrers wird das vordere Ende 37 des Druckbogens 33 in Richtung Fahrbahn bewegt und durch die Verbindung über die Koppelstangen 34 die Zugfedern 36 weiter vorgespannt und die Bremskrallen 35 von der Fahrbahn abgehoben. Das Eingreifen der Bremskrallen 35 erfolgt erfindungsgemäß nicht entgegen der Fahrtrichtung, dadurch wird der Vorteil erhalten, dass bei kurzeitigen Abheben des Schlittens 21 mit dem Fahrer sich die Bremskrallen 35 nicht in der Fahrbahn verkeilen und somit auch keine ungewollten Belastungen auf die flexible Sitzfläche wirken. Des Weiteren ist Vorteil erhalten, dass sich durch die Anordnung des Gelenkvierecks, bei Aufsitzen des Fahrers die Bremskrallen 35 weiter von der Fahrbahn abheben, als wenn die Bremskrallen 35 über einen einfachen Hebel mit dem Druckbogen 33 verbunden sind.

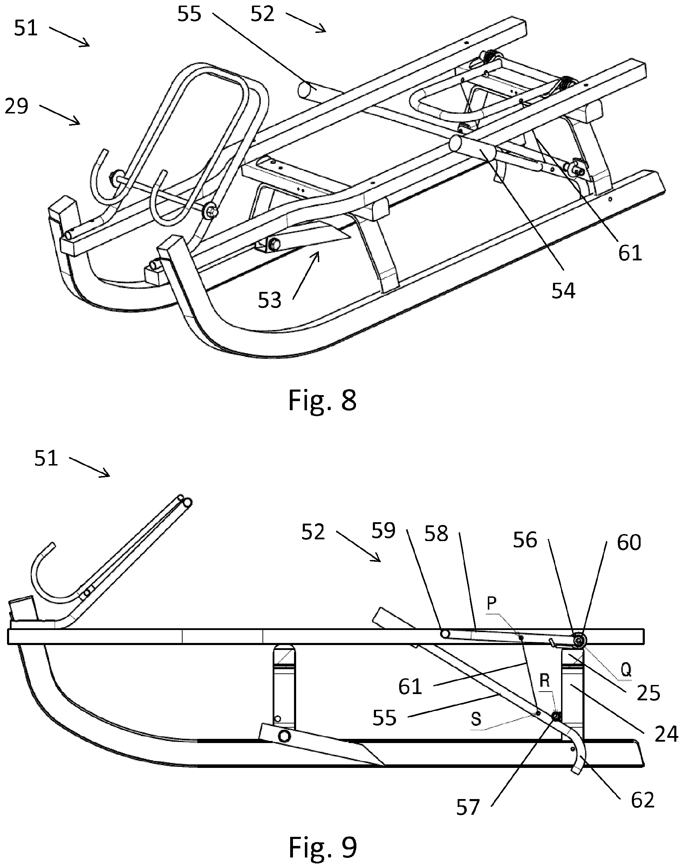

Figur 8 zeigt einen Schlitten 51 in einer isometrischen Ansicht, wobei die flexible Sitzfläche nicht dargestellt ist. Der Schlitten 51 umfasst das Einhängesystem 29, eine automatische Sicherheitsbremse 52 und eine Fallbremse 53. In dieser bevorzugten Ausführungsvariante sind in der automatischen Sicherheitsbremse 52 auch ein linker Handbremshebel 54 und ein rechter Handbremshebel 55 integriert, sowie die Koppeln der Gelenksvierecke als Seile 61 ausgeführt. Durch Integration der Handbremshebel 54 und 55 in die automatischen Sicherheitsbremse 52 wird der Vorteil erhalten, dass dadurch keine eigene Drehachse und Bremskrallen für die Handbremse notwendig sind und daher das Gewicht des erfindungsgemäßen Schlittens 51 verringert wird. Der linke und der rechte Handbremshebel 54 und 55 führen unter der flexiblen Sitzfläche seitlich zu dieser heraus. Dadurch wird der Vorteil erhalten, dass wenn zum Bespiel zwei Personen mit dem Schlitten 51 fahren, die hintere Person leichter zu den Handbremshebeln 54 und 55 gelangt als bei den vorangegangenen Ausführungsbeispielen. Besonders wenn zum Beispiel ein Erwachsener (hintere Person) mit einem Kind (vordere Person) mit dem Schlitten 51 fährt.

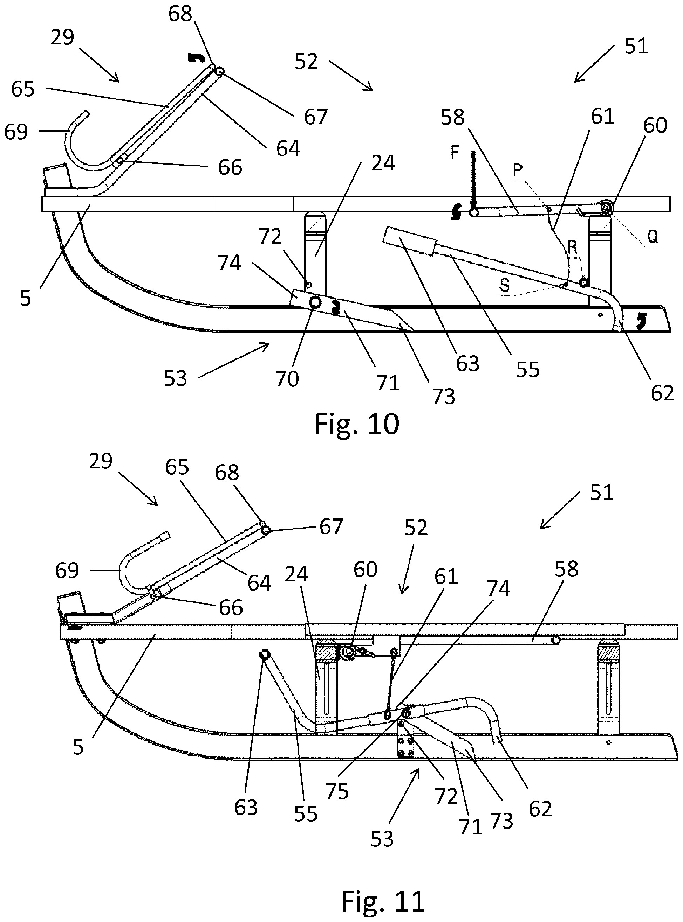

Figur 9 zeigt den erfindungsgemäßen Schlitten 51 gemäß Figur 8, in einer Schnittansicht. Die automatische Sicherheitsbremse 52 umfasst zwei Drehachsen 56 und 57, die Drehachse 56 ist fest mit der hinteren Querstrebe 25 verbunden, und die Drehachse 57 ist fest mit den hinteren Füßen 24 verbunden. Die gerade Verbindung der beiden Drehachsen 56 und 57 bildet das Gestell eines Gelenkvierecks mit den Punkten P, Q, R und S. Des Weiteren umfasst die automatische Sicherheitsbremse 52 einen Druckbogen 58 mit einem vorderen Ende 59 und zwei Schenkelfedern 60. Die Rotationsachsen der Schenkelfedern 60 liegen in der Drehachse 56, wobei die Schenkelfedern 60 in Einbaulage vorgespannt sind und zwischen der hinteren Querstrebe 25 und dem Druckbogen 58 wirken. Hierdurch drückt der Druckbogen 58 entgegen der nicht dargestellten flexiblen Sitzfläche. Die Verwendung einer Schenkelfeder 60 in dieser Einbaulage führt vorteilhafterweise zu einer Reduktion des Platzbedarfs der automatischen Sicherheitsbremse 52. Die Gerade zwischen den Punkten P und Q des Druckbogens 58 bilden die Kurbel des Gelenkvierecks. Der rechte und der linke Handbremshebel 55 und 54 (siehe Figur 8) sind drehbar in der Drehachse 57 gelagert und die Punkte S und R der Handbremshebel 54 und 55 bilden die Schwinge des Gelenkvierecks. Die automatische Sicherheitsbremse 52 umfasst zwei Seile 61 die den Druckbogen 58 mit den Handbremshebeln 54 und 55 verbinden. Die Verbindung erfolgt in den Punkten P des Druckbogens 58 und den Punkten S der Handbremshebeln 54 und 55. Die gespannten Seile 61 bilden im Gelenkviereck die Koppel und sind bei belasteter automatischer Sicherheitsbremse 52 schlaff (Vgl. Figur 10). Die Handbremshebeln 54 und 55 weisen am hinteren Ende jeweils eine Bremskralle 62 auf. Durch die Verwendung der Seile 61, anstatt der Koppelstangen 34 (siehe Figuren 5 bis 7) wie im vorangegangen Ausführungsbeispiel, ist der Vorteil erhalten, dass die Bremskrallen 62 der Handbremshebeln 54 und 55 auch für die automatische Sicherheitsbremse 52 verwendbar sind. Die Seile 61 sind bei unbelasteter automatischer Sicherheitsbremse 52 gespannt und die Handbremshebeln 54 und 55 werden um die Drehachse 57 soweit verdreht, dass die Bremskrallen 62 in die Fahrbahn greifen und der hintere Teil des Schlittens 51 von dieser abgehoben wird.

Es kann erwähnt werden, dass anstatt der gezeigten Federarten andere Federarten oder Federmechanismen verwendet werden können. Zum Beispiel kann eine Art Blattfeder in der flexiblen Sitzfläche integriert sein. Des Weiteren kann erwähnt werden, dass anstatt der Seile auch Koppelstangen mit Langlöchern verwendet werden können.

Figur 10 zeigt den erfindungsgemäßen Schlitten 51 gemäß Figur 8, in derselben Schnittansicht wie Figur 9, wobei der Schlitten 51 und die automatische Sicherheitsbremse 52 im belasteten Zustand dargestellt sind. Die Belastung erfolgt durch einen auf der flexiblen Sitzfläche platzierten Fahrer der durch die Kraft F dargestellt ist. Die Handbremshebeln 54 (siehe Figur 8) und 55 weisen am vorderen Ende zwei Handgriffe 63 auf. Die Handbremshebeln 54 und 55 sind so ausgeführt, dass nur durch deren Gewichtsverteilung, bei freier Drehung um die Drehachse 57, die Handgriffe 63 in Richtung Fahrbahn sinken. Das Gewicht des Fahrers wirkt über den Druckbogen 58 gegen die vorgespannten Schenkelfedern 60 und dreht den Druckbogen 58 in Richtung Fahrbahn. Dadurch senkt sich auch der Punkt P des Druckbogens 58 und die Handgriffe 63 sinken Richtung Fahrbahn und die Bremskrallen 62 heben sich von der Fahrbahn ab. Auf den schlaff dargestellten Seile 61 hängt nur mehr ein Teil des Gewichts der Handbremshebel 54 und 55. Dadurch ist der Vorteil erhalten, dass die Handbremshebel 54 und 55, bei belasteter automatischer Sicherheitsbremse 52, verdreht werden können und deren Bremskrallen 62 auch Teil der automatischen Sicherheitsbremse 52 sind. Des Weiteren bietet die Koppelung durch Seile den Vorteil, dass der rechte und linke Handbremshebel 54 und 55 unabhängig voneinander betätigbar sind und somit auch Kurvenfahrten durch die Handbremshebeln 54 und 55 einleitbar sind.
Es sei erwähnt, dass die Handbremshebel miteinander fest verbunden sein können und durch die Betätigung eines Handbremshebels beide Bremskrallen in die Fahrbahn eingreifen und dass anstatt der Seile auch andere biegeschlaffe Komponenten, wie zum Beispiel Ketten, verwendet werden können. Des Weiteren sei erwähnt, dass die Handbremse zum Beispiel Bowdenzüge aufweisen kann.

Das Einhängesystem 29 umfasst einen Halterahmen 64 und einen Einhängehaken 65. Der Halterahmen 64 ist mit den beiden Holmen 26 fest verbunden und weist eine Drehachse 66 und einen Haltgriff 67 auf. Der Einhängehaken 65 umfasst am oberen Ende einen Haltegriff 68 und am unteren Ende zwei Haken 69. Über die Drehachse 66 ist der Einhängehaken 65 drehbar mit dem Halterahmen 64 verbunden. Mit dem dargestellten Einhängesystem 29 ist eine sichere Bergauffahrt am Schlepp- oder Tellerlift gewährleistet. Am Einstieg des Schlepplifts umfasst der Fahrer mit den Händen die Haltegriffe 67 und 68, anschließend wird der Bügel der Schleppvorrichtung in die beiden Haken 69 eingehängt und der Fahrer mit dem Schlitten 51 hochgezogen. Am Ausstieg des Schlepplifts lässt der Fahrer die beiden Haltgriffe 67 und 68 los und der Einhängehaken 65 klappt, durch die Zugkraft der Schleppvorrichtung, um die Drehachse 66 nach vorne. Durch das Vorklappen des Einhängehakens 65 löst sich der Bügel der Schleppvorrichtung und der Fahrer kann die Ausstiegstelle verlassen.

Es sei erwähnt, dass das Einhängesystem in alternativen Ausführungsvarianten Seile oder Verschlüsse, die auch unter großer Last noch leicht zu öffnen sind, aufweisen kann. Als Beispiele für derartige Verschlüsse seien Schnappschäkel aus dem Segelsport oder Panikhacken aus dem Reitsport erwähnt.

Eine weitere Sicherheitseinrichtung am Schlitten 51 für die Bergauffahrt am Schlepplift ist die Fallbremse 53. Die Fallbremse 53 umfasst eine Drehachse 70, eine Fallbremskralle 71 und einen Anschlag 72. Die Fallbremskralle 71 besteht aus einem unteren Ende 73 und einem Anschlagsende 74. Die Drehachse 70 und der Anschlag 72 sind fest mit einem der vorderen Füße 24 verbunden. Durch die Drehachse 70 ist die Fallbremskralle 71 drehbar mit dem Schlitten 51 verbunden, wobei die Drehung (siehe Pfeil) durch den Anschlag 72 und das Anschlagsende 74 begrenzt ist. Die Fallbremskralle 71 und deren Lagerung in Drehachse 70 sind so ausgeführt, dass während der Fahrt das untere Ende 73, ohne bemerkbare Bremswirkung, permanent die Fahrbahn berührt. Löst sich während der Bergauffahrt am Schlepplift ungewollt der Bügel, oder bricht das Schleppseil, kommt es zu einer kurzen Rückwärtsfahrt und die Fallbremskralle 71 verkeilt sich in der Fahrbahn und verdreht sich bis das Anschlagsende 74 den Anschlag 72 berührt. Der Schlitten 51 kommt mit dem Fahrer zum Stillstand und kann sicher die Schlepptrasse verlassen. Die Fallbremse 53 verhindert ein ungewolltes Rückwärtsfahren des Schlittens 51.

Figur 11 zeigt den erfindungsgemäßen Schlitten 51 in einer bevorzugten Ausführungsvariante, wobei der Druckbogen 58 ausgehend von der Schenkelfeder 60 entgegen der Fahrtrichtung des Schlittens 51 verläuft. Hierdurch wird der Vorteil erreicht, dass während einer Fahrt des Schlittens 51 keine Objekte wie beispielsweise Schneehügel in den Druckbogen 58 einhaken können. In der bevorzugten Ausführungsvariante des Schlittens 51 gemäß Figur 11 ist des Weiteren die Schenkelfeder an einem der Füße 24 befestigt. Hierdurch wird der Vorteil erreicht, dass die Schenkelfeder 60 vor Schlägen geschützt angeordnet ist. Besonders bevorzugt ist die Anordnung der Schenkelfeder in Fahrtrichtung hinter einem der vorderen Füße 24, da an dieser Position ein besonders guter Schutz gegen mechanische Beschädigungen erreicht wird. In der bevorzugten Ausführungsvariante sind die Fallbremskralle 71 und die Bremskralle 62 um eine gemeinsame Drehachse 75 schwenkbar am Schlitten 51 gelagert. Hierdurch wir der Vorteil erreicht, dass der gesamte Schlitten 51 kompakter und mit einer geringeren Anzahl an Bauteilen aufgebaut ist.

## Patentansprüche

1. Schlitten (21, 51), welcher zwei Kufen (22), zwei Holme (26), zwei Querstreben (25), vier Füße (24), sowie eine flexible Sitzfläche aufweist, wobei die Kufen (22) in einer Kufenebene parallel zueinender angeordnet sind, und die Holme (26) in einer zur Kufenebene parallelen Holmebene parallel zueinander angeordnet sind, wobei sich zwischen den Holmen (26) die flexible Sitzfläche befindet, und wobei jede Kufe (22) mittels zumindest zwei Füßen (24) mit einem Holm (26) verbunden ist, und die Holme (26) mittels der Querstreben (25) verbunden sind, wobei der Schlitten (21, 51) eine automatische Sicherheitsbremse (27, 52) aufweist, **dadurch gekennzeichnet, dass**
die automatische Sicherheitsbremse (27, 52) zumindest ein Gelenksviereck (38), welches zumindest einen Druckbogen (33, 58) zumindest eine Bremskralle (35, 62), zumindest eine Koppel (41) sowie zumindest ein Federelement beinhaltet, aufweist, wobei die Bremskralle (35, 62) und der Druckbogen (33, 58) schwenkbar am Schlitten (21, 51) gelagert sind und die Koppel (41) mit dem Druckbogen (33, 58) und der Bremskralle (35, 62) gelenkig verbunden ist, wobei das Federelement mit dem Schlitten (21, 51) verbunden ist und eine Kraft auf das Gelenksviereck (38) ausübt, wobei im unbelasteten Zustand des Schlittens (21, 51) der Druckbogen (33, 58) im Wesentlichen durch die Holmebene anliegend an die flexible Sitzfläche verschwenkt, sowie die Bremskralle (35, 62) zwangsgeführt durch die Kufenebene verschwenkt ist, und im belasteten Zustand des Schlittens (21, 51) sich der an die flexible Sitzfläche anliegende Druckbogen (33, 58) sowie die Bremskralle (35, 62) im Wesentlichen zwischen der Holmebene und der Kufenebene befinden.

2. Schlitten (21) gemäß Anspruch 1, **dadurch gekennzeichnet, dass** die Koppel (41) eine Koppelstange (34) ist.

3. Schlitten (21) gemäß einem der vorherigen Ansprüche, **dadurch gekennzeichnet, dass** das Federelement eine Zugfeder (36) ist.

4. Schlitten (21) gemäß einem der vorherigen Ansprüche, **dadurch gekennzeichnet, dass** das Federelement am Verbindungspunkt (S) von Koppel (41) und Bremskralle (35) am Gelenksviereck (38) angreift.

5. Schlitten (51) gemäß Anspruch 1, **dadurch gekennzeichnet, dass** das Federelement eine Schenkelfeder (60) ist.

6. Schlitten (51) gemäß Anspruch 5, **dadurch gekennzeichnet, dass** die Koppel ein Seil (61) ist.

7. Schlitten (51) gemäß einem der Ansprüche 5 und 6, **dadurch gekennzeichnet, dass** die Schenkelfeder (60) am Druckbogen (58) angreift.

8. Schlitten (51) gemäß Anspruch 7, **dadurch gekennzeichnet, dass** der Druckbogen (58) ausgehend von der Schenkelfeder (60) entgegen einer Fahrtrichtung des Schlittens (51) verläuft.

9. Schlitten (51) gemäß einem der Ansprüche 7 oder 8, **dadurch gekennzeichnet, dass** die Schenkelfeder (60) an einem der Füße (24) befestigt ist.

10. Schlitten (51) gemäß einem der Ansprüche 5 bis 9, **dadurch gekennzeichnet, dass** der Schlitten (51) zumindest einen Handbremshebel (54, 55) aufweist, welcher mit der Bremskralle (62) starr verbunden ist.

11. Schlitten (51) gemäß einem der vorherigen Ansprüche, **dadurch gekennzeichnet, dass** der Schlitten (51) eine Fallbremse (53) aufweist, welche eine schwenkbar am Schlitten (51) gelagerte Fallbremskralle (71) sowie einen Anschlag (72) aufweist, wobei bei einer Bewegung des Schlittens (51) in Fahrtrichtung die Fallbremskralle (71) im Wesentlichen in der Kufenebene über die Fahrbahn gleitet, und bei einer Bewegung des Schlittens (51) entgegen der Fahrtrichtung die Fallbremskralle (71) in die Fahrbahn eingreifend, durch die Kufenebene schwenkt, wobei der Anschlag (72) die Schwenkbewegung begrenzt.

12. Schlitten (51) gemäß Anspruch 9, **dadurch gekennzeichnet, dass** die Fallbremskralle (71) und die Bremskralle (62) um eine gemeinsame Drehachse (75) schwenkbar am Schlitten (51) gelagert sind.

13. Schlitten (51) gemäß einem der vorherigen Ansprüche, **dadurch gekennzeichnet, dass** der Schlitten (51) ein Einhängesystem (29) aufweist, welches einen schwenkbar mit dem Schlitten (51) verbundenen Einhängehaken (65) und einen mit dem Einhängehaken (65) verbundenen Haltegriff (68) aufweist.
